(19) Europäisches Patentamt
European Patent Office
Office européen des brevets

(11) **EP 4 570 764 A1**

(12) **EUROPEAN PATENT APPLICATION**

(43) Date of publication:
**18.06.2025 Bulletin 2025/25**

(21) Application number: **23215757.8**

(22) Date of filing: **12.12.2023**

(51) International Patent Classification (IPC):
**C03B 5/027** (2006.01)   **C03B 5/185** (2006.01)

(52) Cooperative Patent Classification (CPC):
**C03B 5/027; C03B 5/185**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **SCHOTT AG
55122 Mainz (DE)**

(72) Inventors:
• **Strobel, Alexander Uwe
95666 Mitterteich (DE)**

• **Hahn, Michael
55122 Mainz (DE)**
• **Wolf, Sebastian
55122 Mainz (DE)**
• **Weidmann, Günter
55122 Mainz (DE)**
• **Schmidbauer, Wolfgang
55122 Mainz (DE)**
• **Hauf, Moritz
55122 Mainz (DE)**

(74) Representative: **Fuchs Patentanwälte
Partnerschaft mbB
Tower 185
Friedrich-Ebert-Anlage 35-37
60327 Frankfurt am Main (DE)**

(54) **METHOD AND APPARATUS FOR MAKING A GLASS PRODUCT**

(57)    The present invention relates to a method and apparatus for making a glass product wherein an excellent glass quality is achieved by means of a direct electrical heating using multiple inverter-based heating circuits which may be independently adjusted in amplitude and phase angle.

**Figure 3**

EP 4 570 764 A1

**Description**

The present invention relates to a method and apparatus for making a glass product wherein an excellent glass quality is achieved by means of a direct electrical heating using multiple inverter-based heating circuits which may be independently adjusted in amplitude and phase angle.

**Background**

The glassmaker has a number of options for heating a glass melt, e.g. gas burners, electric resistance heating, or inductive heating. As of today, gas is the predominant heat source used in glass melting.

The production of glass has a quite high carbon footprint due to the amount of energy required for the melting and fining processes. This is particularly the case for heating by gas burners which use natural gas. A reduction of the carbon footprint is possible if, instead, an electric resistance heating is used which is provided with power from renewable energy sources like wind power, water power, or solar panels. The same power sources may also be used to produce hydrogen by electrolysis which then can be used to feed the gas burners. While the latter requires less changes to an existing glass production facility with a gas burner heating, the intermediate step of electrolysis is of course associated with a considerable energy loss. Hence, a direct use of the electrical power is more desirable.

There are various kinds of glass compositions. Some glass compositions are relatively easy to manufacture in good quality, others require sophisticated equipment and/or extremely well-balanced production processes. Generally, the glass compositions used to make drinking glasses and bottles, ordinary windowpanes and other construction glass products (e.g. glass wool used for insulation) are of the former type. One reason is that the glass used for these products has rather low melting temperatures and a steep viscosity-temperature curve; in addition, quality criteria of the manufactured products are not very stringent. For example, drinking glasses and construction glass products may contain an occasional bubble, and variations in shape and dimension are tolerable. These glass products may contain impurities to a certain extent without a problem because their use does not require defined light transmission properties, or stringent purity regulations.

The types of glass compositions used for many mass products, such as soda lime glass compositions, have low melting temperatures because of significant amounts of alkali metal oxides and alkaline earth metal oxides. The respective glass melting facilities achieve very high throughput, often more than 200 tons of glass per day, or even 400 tons per day. Of course, the amount of energy needed for making 200 tons of low melting glass is significantly lower than for a higher melting glass.

The quality required for a given product depends on its intended use. Some high-quality glasses are used to make products that do not entertain the occasional bubble and must meet stringent criteria in terms of shape, dimensional variations, and purity (both chemical and optical). Many of these glasses are rather difficult to manufacture not only because of the stringent criteria but also because of high melting temperatures. High melting temperatures may be necessary to achieve melt viscosities sufficient for homogenization and removal of bubbles from the melt. Examples of high-quality glass products include pharmaceutical containers and glass tubes used for making such containers.

It is an object of this invention to provide glass products that meet high quality criteria.

While the use of an electric resistance heating for producing such high quality glass products would be favorable, it faces several difficulties which until the present day have impeded a more widespread application.

One of these difficulties is the corrosion of the electrodes. When operated at the standard line frequency of 50 Hz or 60 Hz, a considerable amount of the metal of the electrodes dissolves into the glass melt and/or bubbles may form on the electrode surfaces. This problem is particularly pronounced with glass melts having a high electric conductivity because the high electric conductivity requires high current densities for generating enough heat within the glass melt to keep it in the liquid state. The high current density in turn increases the electro corrosion effect on the electrodes and the material loss. This material loss of the electrodes is critical particularly for two reasons.

The first reason is obviously the requirement to replace the electrodes at certain intervals. This not only increases the operation costs for the facility but also has an impact on the carbon footprint since for the production of the electrodes a considerable amount of energy is required. Depending on the type of metal used, very high temperatures for melting have to be achieved and the further shaping and handling steps again consume energy. Hence, a frequent exchange of the electrodes significantly increases the carbon footprint of the glass production method. In addition to this, the glass production process has to be stopped for maintenance because it is not possible to simply pull single electrodes out of the melting tank for replacement while the facility continues operation. Hence, when restarting the facility after a replacement of the electrodes, either the whole melting tank filled with the solidified glass melt will have to be heated by burners for re-melting in order to be able to lower the new electrodes into the melt or the glass melt will have to be completely drained from the melting tank before shutting down the process and the process will have to start from scratch by melting new raw materials - again with burners - to prepare a new melt. The amount of energy and the respective carbon footprint required for this shutdown and restarting procedure are even higher than for the production of the electrodes. Of course, the impact on the productivity of the facility is also quite tremendous since it takes days to weeks to reach stable production conditions again which are required for a constant quality glass product.

The second reason is the just mentioned glass quality. The dissolved metal of the electrodes may cause severe discolorations of the glass melt in different colors depending on the type of metal and glass composition used. While this may be tolerable to a certain extent for cheaper glass products which are dark colored anyway, it is already intolerable for cheaper glass products which are to be completely colorless or to have a certain defined color. For high-quality expensive glass products, this discoloration is an absolute show-stopper which has to be avoided by all means. A contamination of the glass products with metal of the electrodes is also critical where a certain light transmittance, especially in the UV region, is needed. In addition, glass products for medical packaging and semiconductor industries have specified limits of metal particles allowed in their products.

In prior art, (at least partially) electrically heated glass melting vessels are already known. Some of these use more than one heating circuit whose electrodes are operated at the standard line frequency of 50 Hz or 60 Hz. Examples of such glass melting vessels can be found in CZ 24918 U1, DE 10 2018 122 017 A1, WO 2014/036979 A1, JP 9315824 A2, JP 9208228 A2, or US 4,211,887 A which all essentially aim at the generation of a certain thermal profile in the melting vessel for improving the process and/or glass quality. This mainly targets the residence time of the glass melt and in particular its uniformity. By locally heating the melt through local application of energy through the electrodes or creating different heating zones with groups of electrodes in the melting vessel, the residence time spread of the melt is improved.

While these melting vessels and their electrode heating systems are designed to create specific thermal profiles within the melting vessel in order to improve the glass quality, the results are far from optimal due to the fact that the single heating circuits or groups of electrodes within the complex electric system in the glass melt may interfere with each other. For existing transformer-based heating systems, the issue of interfering electrodes is not a serious problem because of the design of the transformers, the low frequency, and the usage of current compensated chokes. However, when increasing the frequency, the problem gets worse. Hence, the flow profile of the glass melt cannot be designed as freely and as required for optimal results because neighboring electrodes or groups of electrodes have an influence on the effect on the targeted electrodes.

Prior art melting vessels employing a current frequency of 50 Hz or 60 Hz are generally controlling the power within the heating circuits by means of thyristor controllers with a phase cutting, also known as phase angle control or phase-fired control (PFC), in combination with the transformers. However, particularly this phase cutting with thyristors poses an increased risk of the above-mentioned electro corrosion effects at 50/60 Hz on the electrodes. Components of the glass melt may react with the electrodes and/or platinum parts of the melting vessel, like pipes or stirrers, and the reaction products may end up in the glass product where they may cause discolorations, particles, and striae. As a consequence, the lifetime of the electrodes is reduced, and the glass quality is decreased.

Hence, it is another object of the present invention to provide a preferably continuous production method for high quality glass products which has a low carbon footprint and low electrode corrosion and allows for an improved independent adjustment of electrical heating zones in the melt for the creation of a complex optimized flow profile. Further, this process should in particular work for glass types having a good electric conductivity. To this end, the process should provide an excellent performance regarding the efficiency of the transfer of the provided energy into the melt, i.e., lowest possible losses, on the one hand and minimized electro corrosion of the electrodes on the other hand.

In summary, the state of the art still requires improvements regarding the efficiency of the heating when referring to the percentage of applied electrical energy which is actually used for heating the glass melt, regarding the options for influencing the melt flow and consequently the residence time and its spread, regarding the degree of electrode corrosion, and regarding the versatility of the glass types which can be melted.

## Summary of this disclosure

In a first aspect, this disclosure relates to a method of making a glass product, comprising the steps of

- melting a batch of raw materials to form a glass melt in a melting vessel,

- heating the batch and/or the glass melt in the melting vessel using two or more heating circuits, each comprising an inverter electrically connected via a power factor correction and a transformer to at least two electrodes, the electrodes comprising an electrode material,

- withdrawing the glass melt from the melting vessel,

- forming the glass melt into a glass product,

wherein each inverter provides a current to its heating circuit and controls the amplitude independently of the other heating circuits; and

wherein a common controller acts as a clock generator generating a clock signal for the inverters and controls a shift of the phase angle of the current provided by them to the heating circuits by independently applying a delay $\Delta t \geq 0$ $\mu$s to the clock signal; and

wherein the electrodes are operated at a current frequency of at most 25,000 Hz.

The feature of "controlling the amplitude independently of the other heating circuits" means that the various inverters can be operated at different amplitudes, i.e. the amplitude of one inverter does not have a direct effect on the amplitude of the other. It does not exclude that two or more inverters operate at different amplitudes in a predetermined relationship, e.g. controlled by a controller.

Likewise, the feature of "independently applying a delay $\Delta t$" means that the various inverters can be operated with different delays applied to the clock signal, i.e. the inverters work with differently timewise modified clock signals resulting in a different phase angle of the supplied current. It does neither exclude that two or more inverters operate with different timewise modified clock signals in a predetermined relationship nor that two or more inverters operate with identically timewise modified clock signals.

In a second aspect, this disclosure relates to a method of making a glass product, comprising the steps of

- melting a batch of raw materials to form a glass melt in a melting vessel,

- heating the batch and/or the glass melt in the melting vessel using two or more heating circuits, each comprising an inverter electrically connected via a power factor correction and a transformer to at least two electrodes, the electrodes comprising an electrode material,

- withdrawing the glass melt from the melting vessel,

- forming the glass melt into a glass product,

wherein each inverter provides a current to its heating circuit; and

wherein a common controller acts as a clock generator generating a clock signal for the inverters and controls a shift of the phase angle of the current provided by them to the heating circuits by independently applying a delay $\Delta t \geq 0$ $\mu$s to the clock signal; and

wherein in each heating circuit a phase detector is installed between the transformers and the electrodes which measures the actual current signal at the electrodes and the common controller detects a phase angle shift by comparing this actual current signal with the clock signal provided to the inverters including any applied delay $\Delta t$ and adjusts the clock signal and/or the delay $\Delta t$ in order to compensate for an undesired shift along the current flow from the inverter to the electrodes; and

wherein the electrodes are operated at a current frequency of at most 25,000 Hz.

In a third aspect, this disclosure relates to a method of making a glass product, comprising the steps of

- melting a batch of raw materials to form a glass melt in a melting vessel,

- heating the batch and/or the glass melt in the melting vessel using two or more heating circuits, each comprising an inverter electrically connected via a power factor correction and a transformer to at least two electrodes, the electrodes comprising an electrode material,

- withdrawing the glass melt from the melting vessel,

- forming the glass melt into a glass product,

wherein each inverter provides a current to its heating circuit; and

wherein a common controller acts as a clock generator generating a clock signal for the inverters; and

wherein in each heating circuit a phase detector is installed between the transformers and the electrodes which measures the actual current signal at the electrodes and the common controller detects a phase angle shift by comparing this actual current signal with the clock signal provided to the inverters and adjusts the clock signal and/or applies a delay $\Delta t \geq 0$ μs to the clock signal in order to compensate for an undesired shift along the current flow from the inverter to the electrodes; and

wherein the electrodes are operated at a current frequency of at most 25,000 Hz.

In a fourth aspect, this disclosure relates to an apparatus for glass melting comprising

- a melting vessel having walls and a bottom, and optionally a superstructure, for holding a glass melt,

- the melting vessel further having two or more heating circuits, each comprising a frequency changer electrically connected via a power factor correction and a transformer to at least two electrodes immersible into the glass melt,

- a common controller,

- conductors connecting the frequency changers, the power factor corrections, the transformers, and the electrodes,

- signal lines connecting the frequency changers with the common controller, and

- optionally an inlet and/or an outlet for the glass melt,

    wherein each inverter provides a current to its heating circuit and controls the amplitude independently of the other heating circuits; and

    wherein the common controller acts as a clock generator generating a clock signal for the inverters and controls a shift of the phase angle of the current provided by them to the heating circuits by independently applying a delay $\Delta t \geq 0$ μs to the clock signal; and

    wherein the inverters are set to provide a current frequency of at most 25,000 Hz.

In a fifth aspect, this disclosure relates to an apparatus for glass melting comprising

- a melting vessel having walls and a bottom, and optionally a superstructure, for holding a glass melt,

- the melting vessel further having two or more heating circuits, each comprising a frequency changer electrically connected via a power factor correction and a transformer to at least two electrodes immersible into the glass melt,

- a common controller,

- conductors connecting the frequency changers, the power factor corrections, the transformers, and the electrodes,

- signal lines connecting the frequency changers with the common controller, and

- optionally an inlet and/or an outlet for the glass melt,

    wherein each inverter provides a current to its heating circuit; and

    wherein the common controller acts as a clock generator generating a clock signal for the inverters and controls a shift of the phase angle of the current provided by them to the heating circuits by independently applying a delay $\Delta t \geq 0$ μs to the clock signal; and

    wherein in each heating circuit a phase detector is installed between the transformers and the electrodes for measuring the actual current signal at the electrodes and the common controller is configured to detect a phase angle shift by comparing this actual current signal with the clock signal provided to the inverters including any applied delay $\Delta t$ and to adjust the clock signal and/or the delay $\Delta t$ in order to compensate for an undesired shift along the current flow from the inverter to the electrodes; and

wherein the inverters are set to provide a current frequency of at most 25,000 Hz.

In a sixth aspect, this disclosure relates to an apparatus for glass melting comprising

- a melting vessel having walls and a bottom, and optionally a superstructure, for holding a glass melt,

- the melting vessel further having two or more heating circuits, each comprising a frequency changer electrically connected via a power factor correction and a transformer to at least two electrodes immersible into the glass melt,

- a common controller,

- conductors connecting the frequency changers, the power factor corrections, the transformers, and the electrodes,

- signal lines connecting the frequency changers with the common controller, and

- optionally an inlet and/or an outlet for the glass melt,

wherein each inverter provides a current to its heating circuit; and

wherein the common controller acts as a clock generator generating a clock signal for the inverters; and

wherein in each heating circuit a phase detector is installed between the transformers and the electrodes for measuring the actual current signal at the electrodes and the common controller is configured to detect a phase angle shift by comparing this actual current signal with the clock signal provided to the inverters and to adjust the clock signal and/or to apply a delay $\Delta t \geq 0$ μs to the clock signal in order to compensate for an undesired shift along the current flow from the inverter to the electrodes; and

wherein the inverters are set to provide a current frequency of at most 25,000 Hz.

In a seventh aspect, this disclosure relates to a glass product, optionally obtainable or obtained according to the method disclosed herein, comprising a glass composition having a fining agent and electrode material, wherein the fining agent is present in an amount of at least 300 ppm and the electrode material is present as an oxide in an amount of less than 15 ppm, the glass product comprising less than 2 bubbles per 10 g of glass, wherein optionally the glass composition has a total carbon content of less than 310 ppm, based on the weight of the carbon atoms with respect to the weight of the glass product.

Details of this disclosure

A "glass melt" is a volume of a batch of glass raw materials that has a viscosity of less than $10^{7.6}$ dPas. Such a viscosity can be measured using the fiber elongation method, e.g. as described in DIN ISO 7884-6:1998-02, where the elongation speed of a fiber with a defined diameter is determined with different weights at different temperatures.

The temperature at which the glass melt has a viscosity of $10^2$ dPas is herein called "temperature T2". Similarly, the temperature at which the glass melt has a viscosity of $10^4$ dPas is herein called "temperature T4". Temperature T2 is less than 1,500 °C for glass compositions with high contents of alkali metal oxides or alkaline earth metal oxides, such as soda lime glass and other glass compositions. These viscosities can be measured using a rotational viscosimeter, e.g. as described in DIN ISO 7884-2:1998-2. The dependence of viscosity on temperature is determined according to the VFT equation (Vogel-Fulcher-Tammann). The VFT equation is shown below.

$$\lg(\eta/dPas) = A + \frac{B}{(t - t_0)}$$

In the VFT equation, t is the temperature under consideration. A, B and $t_0$ are the so-called VFT constants that are specific for each glass composition.

This disclosure relates to methods which allow for the electric heating of all types of glass with multiple heating circuits which can be influenced independently of each other in amplitude and phase of the current supplied to the electrodes. Further, the method is suitable for all types of melting vessels whose geometries allow for the installation of multiple heating circuits, such as melting tanks, platinum pipes, fining tanks, and flow ducts. It is not limited to rectangular geometries but also works with polygonal or circular geometries. This allows for the creation of highly complex flow profiles in the melt for improving the important parameters for glass quality of the residence time and the sand grain dissolution. Moreover, a continuous glass melting without fossil fuels is possible as the method may not only be used as an electrical additional heating but also as a fully electric heating.

The common controller used herein acts as a frequency control unit and is basically a clock generator which provides an external time base for all inverters connected to that common controller. The common controller can be a part of a distributed control system (DCS). Within the DCS, the amplitudes at at least one electrode of each heating circuit and therefore the power of each inverter is controlled. The amplitudes can also be manipulated individually at each inverter.

A "melting vessel" is a vessel used for holding a glass melt. The vessel defines a volume that can contain a glass melt. The melting vessel may have a substantially rectangular base, or bottom plate. It may have walls to keep the melt within the vessel. Typically, a melting vessel will not be filled to the rim. A melting vessel may have a superstructure above the glass melt surface ("covered melting vessel"). The superstructure may be vaulted. The "melting vessel" may be a part of a larger melting facility. The term "melting vessel" as used herein is meant as an umbrella term for all containers containing a glass melt which may comprise parts such as a melting tank, a refining tank or refining area, or pipes or ducts connecting the same.

A "bubble" is a gaseous inclusion within the glass or the glass melt, optionally having a diameter of at least 10 $\mu$m. The "diameter" means the largest diameter of the gaseous inclusion.

"Residence time" is the time that a given portion of the glass melt spends in the melting vessel before being withdrawn from the melting vessel. Residence time can be measured using so-called tracers, i.e. components that are added to the glass melt so that they can be detected in the product, allowing conclusions as to the time spent in the melting vessel. Examples of tracer compounds are Ca, Sr and Y. The "average residence time" is defined as:

$$\frac{melting\ vessel\ volume\ [m^3]}{melting\ vessel\ throughput\ [\frac{m^3}{h}]}$$

The "minimum residence time" or "shortest residence time" is referring to the shortest time a portion of the glass melt will spend in the vessel. In an ideal scenario, every portion of the glass melt will spend exactly the same amount of time in the vessel. This will create uniform melt properties and, hence, the best glass quality. However, due to a complex flow pattern, turbulences, "short-circuit flows", and dead zones in a real vessel, there is a spread of the amount of time around the average residence time. Melt portions in a dead zone or turbulences will spend more time in the vessel while those in a short-circuit flow which refers to a fast stream directly from the entry to the exit of the vessel will exit faster. To improve the glass melting process, the glass maker consequently aims at a spread of the residence time as small as possible and in particular tries to shift the minimum residence time towards the average residence time because the fast-exiting portions have a high risk of insufficiently melted batch materials or an insufficiently homogenized melt. One option for achieving this goal is to influence the temperature zones in the melt and therewith the flow patterns.

While increasing the operation frequency of the electrodes may reduce the electro corrosion potential, this would further increase the influencing effect amongst the heating circles if used with the phase cutting thyristor controllers. Moreover, the increased frequency also causes an inductive power loss and an inductive heating of the metal parts in the vicinity of the heating circuits. Hence, the present disclosure uses a different approach to be able to minimize the electro corrosion potential and, additionally, to independently adjust the single heating circuits for the creation of optimized complex flow profiles of the melt. Both objects are achieved by using inverters before transformers in the single heating circuits which are jointly controlled by a controller.

The glass product can be a sheet, wafer, plate, tube, rod, ingot, strip, or block.

The inventors have found out that further particularly disadvantageous aspects of the thyristor controller and adjustable transformer technology as used in prior art are the facts that with this technology, the achievable phase angle difference between single heating circuits is limited, not flexibly selectable according to needs of a desired heating pattern in the melting vessel, and preset by the choice of the transformer. Known options are multiples of 30°, in particular 30°, 60°, 90°, and 120°, which are created by wiring the transformers to a 3-phase power grid, wherein special transformers are required for certain phase angles and two transformers in a Scott circuit for 90°. In addition, when using the same transformers and wiring to the power grid, all heating circuits within the system will then have to have a fixed phase angle difference to the neighboring heating circuits. Hence, one cannot realize desired asymmetries in the heating for creating hotspots in the melt because the phase angles are not freely adjustable. Neither is it possible to readjust heating circuits in a system operated at higher current frequencies in which the transformer or the power cables have caused a shift in their phase angles on the way from the inverter to the electrode.

The disclosed method and apparatus can achieve several advantages over those of prior art. In particular, they achieve a high electric efficiency while keeping the electro corrosion of the electrodes low. Furthermore, they achieve an optimal current distribution in the glass melt based on desired patterns. They allow for the creation of different zones in the glass melt by targeted current and power distribution in the glass melt. They can create high minimal residence times of the glass melt within the melting vessel and avoid short circuit flows. Finally, they achieve an optimal melting of a glass batch in the melting vessel.

Regarding the selection of a suitable current frequency, there also are associated drawbacks with either end of the selectable range. While very low current frequencies often cause severe electro corrosion of the electrode material and by this cause defects in the produced glass products, very high current frequencies generally cause higher losses of the applied electric energy due to parasitic currents and induction. With the method and apparatus of this disclosure, while continuously having a high efficiency, the inverter-based electric heating circuits may be operated in a range from about 20 Hz to 25,000 Hz, i.e., from below the standard line frequency up to the medium frequency range, which allows for the selection of the frequency best suited to the posed melting problem.

As mentioned above, the residence time of the glass melt in the melting vessel and its spread, in particular the minimum residence time, are an important factor for the quality of the glass product produced from this glass melt. The residence time and its spread are improved by locally applying energy to the glass melt for creating hotspots and by installing different heating zones in the melting vessel. In prior art, for this purpose, only the standard line frequency of 50 Hz / 60 Hz is used. The different heating zones are created by constructional aspects of the melting vessel, varying the spatial density of the installed electrodes, different wiring patterns of the electrodes, and/or influencing the current path by means of phase and power differences. With the method and apparatus of this disclosure, not only the advantages of the inverter-based heating and the locally different heating of the glass melt are possible but also the phase angle shift is freely adjustable in a range of 0° to 360°. This way, the desired asymmetric heating profiles can be established and even a heating in coordinated levels is possible. At the same time, it is still possible to provide a different power to the single heating circuits. Hence, it may even be possible to spare any constructional measures by tailoring the electrical power distribution in the glass melt.

Controlling and adjusting the phase angle of the current is a valuable and powerful option. As the phase angle may shift along the path from the inverter to the electrodes when operated at higher frequencies and also vary during operation, a correction of this shift from the desired values is particularly advantageous in two aspects. A detector which is installed at the electrodes can detect and measure the phase angle shift. Since the present method and apparatus allow for the free adjustment of the phase angle of the current, this detected shift can be corrected. Such a correction is useful in a first aspect for the correct establishment of the intended heating profile and hotspot creation for influencing the flow pattern of the glass melt. In a second aspect, this can also be an important factor for minimizing the occurrence of parasitic currents and the power loss associated with them in a melting vessel which is operated with parallel heating circuits having a phase angle difference of 0° like the standard heating circuits used in prior art. This way, the electrical efficiency may be improved when operating at higher frequencies and, consequently, either energy can be saved or the operation frequency may be increased for lowering the electro corrosion further.

Another important effect which can be achieved by the present method and apparatus is a maximization of the effective electrode surface. When heating in parallel with non-shifted phase angles, only 50 % of the surface of a plate-shaped electrode will be used for the flow of current. For rod-shaped electrodes, the respective value is about 66 %. As opposed to this, the present disclosure will allow for values of even beyond 95 % in specially arranged electrodes which are operated with suitable phase angle shifts. This will of course drastically reduce the electro corrosion potential and increase the lifetime of the electrodes.

A further advantage of the present method and apparatus is that the power grid is loaded completely symmetrically, since an oscillation is generated from the three phases of the power supply in equal parts when using inverters.

Regarding the conductivity of the glass melt, the present method and apparatus consider some adaptations for achieving an optimal efficiency. The voltage should be adapted according to the conductivity in the melting vessel and the desired power. This can be done with transformers which are specifically adapted to the frequency of the inverters. Furthermore, the phase angle between the current and the voltage has to be corrected. In an ideal case, current and voltage are in phase. This is the case at the point of origin of the power. Due to unwanted complex resistances (capacitances, inductances) along the current path caused by cable coverings, transformer, etc., current and voltage can no longer be in phase. Due to this phase angle shift, part of the generated electrical power is not released in the glass melt (reactive power). The apparatus of the present disclosure uses a power factor correction in combination with the transformer for compensating this reactive power. These two adaptations may be implemented at any point between the inverter and the melting vessel. In optional embodiments, these adaptations are implemented in close proximity to the electrodes.

In embodiments of the method of making a glass product, may comprise the steps of

- melting a batch of raw materials to form a glass melt in a melting vessel,

- heating the batch and/or the glass melt in the melting vessel using two or more heating circuits, each comprising an inverter electrically connected via a power factor correction and a transformer to at least two electrodes, the electrodes comprising an electrode material,

- withdrawing the glass melt from the melting vessel,

- forming the glass melt into a glass product,

wherein each inverter provides a current to its heating circuit and controls the amplitude independently of the other heating circuits; and

wherein a common controller acts as a clock generator generating a clock signal for the inverters and controls a shift of the phase angle of the current provided by them to the heating circuits by independently applying a delay $\Delta t \geq 0$ $\mu s$ to the clock signal wherein the delay $\Delta t$ differs by at least 0.1 $\mu s$ between at least two of the inverters; and

wherein the electrodes are operated at a current frequency of at most 25,000 Hz.

For example, the delay $\Delta t$ applied to two of the inverters may differ by 0.1 $\mu s$ ($\Delta t_2 = \Delta t_1 + 0.1$ $\mu s$) while the further inverters have the same or a different or no delay applied, i.e. $\Delta t = \Delta t_1$ or $\Delta t_2$, $\Delta t \# \Delta t_1$ or $\Delta t_2$, or $\Delta t = 0$ $\mu s$, respectively. As a result, between at least two heating circuits a certain shift in phase angle will occur while the other heating circuits may have the same relative shift or a different one.

In embodiments, the phase angle shift between the heating circuits is freely adjustable in a range of 0° to 360°.

In embodiments, the common controller applies the delay $\Delta t \geq 0$ $\mu s$ to each clock signal internally and/or externally by means of delay generators.

In embodiments, in one or more or all of the heating circuits a phase detector may be installed between the transformers and the electrodes which measures the actual current signal at the electrodes and the common controller detects a phase angle shift by comparing this actual current signal with the clock signal provided to the inverters including any applied delay $\Delta t$ and adjusts the clock signal and/or the delay $\Delta t$ in order to compensate for an undesired shift along the current flow from the inverter to the electrodes.

Electrotechnically, the system of the present disclosure can be seen as a complex meshed network. Each inverter can initially feed into the glass melt with different power, current, voltage, and phase. Due to a typical resistivity of the glass melt in a range of from 2 $\Omega \cdot cm$ to 200 $\Omega \cdot cm$ at a temperature of 1,600 °C, the inverters as sources of power are not independent from each other. A change in a parameter at one inverter may cause a change in all other inverters being part of the same network. All inverters are to be operated with the same frequency in the range of from 20 Hz to 25,000 Hz and to have a fixed phase relative to each other. These two conditions are achieved by a clock generator in a common controller which provides an external time base for all inverters connected to that common controller.

In a first mode of operation, where $\Delta t = 0$, all inverters have no phase angle shift relative to each other since all oscillations start at a certain point in time t = 0, which is defined by the common controller. In a second mode of operation, where a shift in the phase angle of a certain inverter is desired, a respective delay $\Delta t$ in the clock signal supplied to it will be applied. This can be done individually and independently from each other for all inverters. The delay in the trigger signals may be implemented either centrally directly within the common controller or decentrally by means of separate delay generators installed between the common controller and the respective inverters. With the delay set to zero, the system works like in the first mode of operation.

Using a phase detector which is installed at the electrode, it is possible to measure the actual signal curve of the current at the electrode and compare it with the signal of the clock generator in the common controller (including any applied delay $\Delta t$) for determining the phase angle shift of each electrode or heating circuit, respectively. This information can be used for varying the applied delay time $\Delta t$ to precisely set a desired phase angle shift at an electrode or to readjust the electrode to be in phase with the others if no shift in phase angle is intended.

In some embodiments of the method, the electrodes are operated at a current frequency of at least 20 Hz and at most 25,000 Hz, optionally of at least 50 Hz and at most 25,000 Hz, optionally of at least 50 Hz and at most 10,000 Hz, optionally of at least 100 Hz and at most 10,000 Hz, optionally of at least 1,000 Hz and at most 5,000 Hz, optionally of at least 1,000 Hz and at most 3,000 Hz.

The electrodes may be operated at a current frequency of less than 25,000 Hz, less than 10,000 Hz, less than 5,000 Hz, less than 4,500 Hz, less than 4,000 Hz, less than 3,500 Hz, or less than 3,000 Hz. In particular, the electrodes may be operated at a current frequency of less than 3,000 Hz. The electrode may be operated at a current frequency of at least 20 Hz, at least 50 Hz, at least 100 Hz, at least 1,000 Hz, at least 1,500 Hz, at least 2,000 Hz, or at least 2,500 Hz. A lower limit of 100 Hz ascertains that the electrode corrosion is sufficiently low at the required current density and the formation of bubbles is adequately suppressed. An upper limit of 5,000 Hz ascertains that the power loss due to emission and induction remains at an acceptable level.

In embodiments of the method, a flow and/or the residence time of the glass melt in the melting vessel are adjusted by setting the amplitude and/or the phase angle of the current of each individual heating circuit such that desired thermal zones are created within the glass melt.

In embodiments of the method, the common controller may synchronize its clock signal with an external clock signal. The common controller may synchronize to the external clock signal which is equivalent to a frequency by detecting the zero crossings of the external frequency signal and adjusting its own zero crossings of the clock signal with them. The frequencies may in this case be identical, but they do not have to be identical. In the latter case, the zero crossings of the lower frequency first signal may be matched with the nth zero crossing of the higher frequency second signal wherein n is dependent on the frequency difference. Such an external clock signal synchronization may be advantageous for adapting to the continuously slightly changing power grid frequency of neighboring components in a melting facility which is operated at the power grid frequency of 50/60 Hz.

In embodiments of the method, the melting vessel is selected from a melting tank, a platinum pipe, a fining tank, a horizontal flow duct, and a vertical duct. The disclosed method is equally suitable for all of these types of melting vessels.

One or more or all of the electrodes may be rod-shaped and/or plate-shaped and/or dome-shaped and/or tube-shaped and/or block-shaped. While in some cases the electrodes may also be plate-shaped and then in particular be designed as a part of the walls or bottom of the melting vessel, in most cases rod-shaped electrodes are chosen. The rod-shaped electrodes are more versatile in arranging and easier to replace. Moreover, since the rod-shaped electrodes are spot-like sources of current, the zones of input of energy into the melt are easier to design to the desired layout. In some applications, also dome-shaped, tube-shaped, or block-shaped electrodes may be used in place of the rod-shaped electrodes.

One or more or all of the electrodes may be arranged horizontally extending from a wall of the melting vessel or vertically extending from a bottom of the melting vessel or from a surface of the glass melt.

In further embodiments, the method is a continuous process or batch process.

The method is particularly suitable for a continuous process because its strength lies in the specific shaping of the flow of the glass melt which is of course more relevant for the continuous process.

In further embodiments, additional heating is provided by a fuel burner or no fuel burner is used for additional heating. In many cases, no fuel burner is used for additional heating. However, if the amount of heat required by the glass melt is very high, it may be more favorable in view of the carbon footprint not to increase the current density, as it causes more corrosion and power loss, but to provide additional heat by a burner. This burner may then be fueled by a "green gas", i.e. hydrogen produced from renewable energies. However, often no fuel burner is used. As an alternative to a fuel burner, also an electrical additional heating means can be used.

In further embodiments, the method is a continuous process having a throughput of at least 1 $t/d \cdot m^2$ of melting vessel cross-section. The throughput may be at least 1 $t/d \cdot m^2$ or at least 2 $t/d \cdot m^2$ or at least 3 $t/d \cdot m^2$ or at least 4 $t/d \cdot m^2$. The throughput may be at most 10 $t/d \cdot m^2$ or at most 9 $t/d \cdot m^2$ or at most 8 $t/d \cdot m^2$. The throughput may be 1 $t/d \cdot m^2$ to 10 $t/d \cdot m^2$ or 2 $t/d \cdot m^2$ to 9 $t/d \cdot m^2$ or 3 $t/d \cdot m^2$ to 8 $t/d \cdot m^2$ or 4 $t/d \cdot m^2$ to 8 $t/d \cdot m^2$. Such a throughput may aid in reducing the content of the electrode material in the resulting glass product. The increased flow of the glass melt shortens the residence time of the melt in the melting vessel and consequently the time during which the melt may be contaminated with the dissolved electrode material. Meanwhile, the corrosion rate of the electrodes remains essentially constant since the main factors of influence are the composition of the glass melt, the electrode material, and the current density.

In embodiments, a temperature of the glass melt, a withdrawal rate of glass melt from the melting vessel, and an electrical operation frequency of the electrodes is such that the corrosion rate of one or more or all of the electrodes is less than 2.5 mm/a with a current density of 0.5 $A/cm^2$ and a glass melt temperature of 1,550 °C.

It has been found by the inventors to be advantageous to select the listed parameters in combination such that the corrosion rate of the electrodes is less than 2.5 mm per year for optimal results. The corrosion rate may be less than 2.5 mm/a, less than 2.25 mm/a, less than 2.0 mm/a, less than 1.75 mm/a, or less than 1.5 mm/a. The corrosion rate may be at least 0.05 mm/a, at least 0.1 mm/a, at least 0.15 mm/a, at least 0.2 mm/a, at least 0.25 mm/a, or at least 0.3 mm/a.

In further embodiments of the method, the electrode material of one or more or all of the electrodes is selected from Pt, Rh, Ir, Pd, alloys of these noble metals, Ta, Mo, $MoSi_2$, $MoZrO_2$, W, $SnO_2$, and combinations thereof.

In further embodiments, the current density used at one or more or all of the electrodes is 0.2 $A/cm^2$ - 2.0 $A/cm^2$. This range provides good balance between power input into the melt and corrosion as well as a possible reduction of the number of electrodes. The current density may be 0.2 $A/cm^2$ - 2.0 $A/cm^2$ or 0.3 $A/cm^2$ - 1.8 $A/cm^2$ or 0.4 $A/cm^2$ - 1.65 $A/cm^2$ or 0.5 $A/cm^2$ - 1.5 $A/cm^2$. The current density may be at least 0.2 $A/cm^2$ or at least 0.3 $A/cm^2$ or at least 0.4 $A/cm^2$ or at least 0.5 $A/cm^2$. The current density may be at most 2.0 $A/cm^2$ or at most 1.8 $A/cm^2$ or at most 1.65 $A/cm^2$ or at most 1.5 $A/cm^2$.

In some embodiments, a ratio of the current frequency to the electric conductivity of the melt at a temperature of 1,600 °C is 0.001 $kHz \cdot \Omega \cdot m$ to 50 $kHz \cdot \Omega \cdot m$. It has been found by the inventors that by means of this ratio range, the current frequency may be set to provide a low carbon footprint for a given glass composition to be melted having a certain electric conductivity. The ratio may be at least 0.001 $kHz \cdot \Omega \cdot m$, at least 0.01 $kHz \cdot \Omega \cdot m$, at least 0.1 $kHz \cdot \Omega \cdot m$, at least 0.5 $kHz \cdot \Omega \cdot m$, at

least 1 kHz.Q.m, at least 2 kHz.Q.m 3 kHz.Q.m, at least 5 kHz·Ω·m, at least 7 kHz.Q.m, at least 10 kHz.Q.m, at least 15 kHz Q m, at least 20 kHz·Ω·m, or at least 25 kHz.Q.m. The ratio may be at most 50 kHz.Q.m, at most 49 kHz.Q.m, at most 48 kHz·Ω·m, at most 47 kHz.Q.m, at most 46 kHz.Q.m, at most 45 kHz.Q.m, at most 44 kHz·Ω·m, at most 43 kHz.Q.m, at most 42 kHz.Q.m, at most 41 kHz.Q.m, at most 40 kHz·Ω·m, at most 39 kHz·Ω·m, or at most 38 kHz.Q.m. The ratio may be 0.001 kHz Ω m - 50 kHz·Ω·m, 0.01 kHz Ω m - 49 kHz Ω m, 0.1 kHz.Q.m - 48 kHz Ω m, 0.5 kHz Ω m - 47 kHz·Ω·m, 1 kHz·Ω·m - 46 kHz.Q.m, 2 kHz.Q.m - 45 kHz.Q.m, 3 kHz.Q.m - 44 kHz.Q.m, 5 kHz.Q.m - 43 kHz·Ω·m, 7 kHz.Q.m - 42 kHz.Q.m, 10 kHz.Q.m - 41 kHz.Q.m, 15 kHz.Q.m - 40 kHz.Q.m, 20 kHz·Ω·m - 39 kHz.Q.m, or 25 kHz Ω m - 38 kHz.Q.m.

In some embodiments, the electric conductivity of the melt at a temperature of 1,600 °C is at least 0.5 S/m. The current method is particularly useful for glass compositions which form a melt having a high electric conductivity because the problem of an increased carbon footprint is very pronounced in these types of glass and not yet satisfactorily solved in the state of the art. Hence, these compositions will profit most of the possibility of a fully electric heating. However, the application of the disclosed method is of course not limited to them. The electric conductivity may be at least 0.5 S/m, at least 0.75 S/m, at least 1 S/m, at least 2 S/m, at least 3 S/m, at least 4 S/m, at least 5 S/m, at least 10 S/m, at least 15 S/m, at least 20 S/m, at least 25 S/m, or at least 30 S/m. The electric conductivity may be at most 50 S/m, at most 48 S/m, at most 47 S/m, at most 46 S/m, at most 45 S/m, at most 44 S/m, at most 43 S/m, at most 42 S/m, at most 41 S/m, at most 40 S/m, at most 38 S/m, or at most 36 S/m. The electric conductivity may be 0.5 S/m - 50 S/m, 0.75 S/m - 48 S/m, 1 S/m - 47 S/m, 2 S/m - 46 S/m, 3 S/m - 45 S/m, 4 S/m - 44 S/m, 5 S/m - 43 S/m, 10 S/m - 42 S/m, 15 S/m - 41 S/m, 20 S/m - 40 S/m, 25 S/m - 38 S/m, or 30 S/m - 36 S/m. In particular examples, the electric conductivity may be 0.8 S/m, 1.7 S/m, 2.7 S/m, 3.7 S/m, 11.2 S/m, 13.2 S/m, 32.8 S/m, or 42.8 S/m.

The signal lines of the apparatus may be a direct or indirect connection by wire or wireless technique.

When referring to the apparatus having "an" inlet and/or "an" outlet for the glass melt, this is to be understood to comprise also a plurality of openings for letting the melt in and out of the melting vessel.

In an embodiment, the inverters are set to provide a current frequency of at least 20 Hz and at most 25,000 Hz, optionally of at least 50 Hz and at most 25,000 Hz, optionally of at least 50 Hz and at most 10,000 Hz, optionally of at least 100 Hz and at most 10,000 Hz or of at least 1,000 Hz and at most 5,000 Hz.

In embodiments, the common controller may be configured to apply the delay $\Delta t \geq 0$ $\mu$s to each clock signal internally and/or delay generators may be installed in the signal lines connecting the inverters with the common controller.

In embodiments, in one or more or all of the heating circuits a phase detector may be installed between the transformers and the electrodes for measuring the actual current signal at the electrodes and the common controller may be configured to detect a phase angle shift by comparing this actual current signal with the clock signal provided to the inverters including any applied delay $\Delta t$ and to adjust the clock signal and/or the delay $\Delta t$ in order to compensate for an undesired shift along the current flow from the inverter to the electrodes.

In further embodiments, one or more or all of the electrodes may be located partially or completely in or on a wall of the melting vessel and/or in or on the bottom of the melting vessel and/or constitute a wall section and/or a bottom section of the melting vessel. One or more electrodes may be located partially or completely in or on a wall of the melting vessel. One or more electrodes may be located partially or completely in or on a bottom plate of the melting vessel. In an embodiment, one or more electrodes constitute a wall section and/or a bottom plate section of the melting vessel. In an embodiment, one or more of the electrodes may be extending upwardly from the bottom of the melting vessel up to at least 20 % glass melt depth, at least 30 %, at least 40 %, at least 50 %, at least 60 %, at least 70 % or at least 80 % of the glass melt depth. Optionally, the one or more electrodes may extend up to 100 %, up to 95 % or up to 90 % of the glass melt depth from the bottom of the melting vessel. Optionally, the one or more electrodes may extend from 50 % to 100 %, from 60 % to 95 %, or from 70 % to 90 % of the glass melt depth from the bottom of the melting vessel.

In further embodiments, the one or more or all of electrodes may be rod-shaped, dome-shaped, plate-shaped, tube-shaped, or block-shaped. The rod-shaped electrodes are more versatile in arranging and easier to replace. Moreover, since the rod-shaped electrodes are spot-like sources of current, the zones of input of energy into the melt are easier to design to the desired layout. In some applications, also dome-shaped, tube-shaped, or block-shaped electrodes may be used in place of the rod-shaped electrodes.

In further embodiments, the electrode material may be selected from Pt, Rh, Ir, Pd, alloys of these noble metals, Ta, Mo, $MoSi_2$, $MoZrO_2$, W, $SnO_2$, and combinations thereof. By using one of these materials, the operation of the apparatus can be optimized. Those electrodes provide an optimal combination of low corrosion and suitability for the operation at the claimed current frequencies.

In embodiments, the melting vessel is selected from a melting tank, a platinum pipe, a fining tank, a horizontal flow duct, and a vertical duct. The melting vessel may be any part of a larger melting facility containing a glass melt which may comprise parts such as a melting tank, a refining tank or refining area, or pipes or ducts connecting the same. In general, those pipes are made of platinum. The ducts may also be made of platinum or of refractory ceramics. The only prerequisite regarding the melting vessel and its shape and size is that it will allow for the installation of two or more heating circuits, i.e., there has to be enough space for at least two pairs of electrodes within the vessel.

In embodiments, the melting vessel has a cross-sectional shape of a circle, an oval, or a polygon having 3 to 64 corners. With the ability to adjust the heating circuits independently of each other, it is possible to electrically heat melting vessels which do not have a rectangular or square cross-sectional shape. Hence, the cross-sectional shape may be a circle or oval, which mainly concerns pipes or ducts, or a polygon having 3 to 64 corners, which is particularly of interest for melting tanks and fining tanks. The polygon may optionally have 3, 4, 5, 6, 7, 8, 9, 10, 11, 12, 13, 14, 15, 20, 24, 30, 32, 36, 42, 48, 54, 60, or 64 corners. In certain useful embodiments the polygon has 4, 5, 8, 10, 12, 24, 36, 48, 60, or 64 corners.

The fining agent may be present in the glass product in an amount of at least 300 ppm or at least 400 ppm or at least 500 ppm or at least 600 ppm or at least 700 ppm or at least 800 ppm or at least 900 ppm or at least 1,000 ppm or at least 2,000 ppm or at least 3,000 ppm or at least 4,000 ppm or at least 5,000 ppm or at least 10,000 ppm or at least 15,000 ppm. The fining agent may be present in an amount of at most 30,000 ppm or at most 28,000 ppm or at most 26,000 ppm or at most 24,000 ppm or at most 22,000 ppm or at most 20,000 ppm or at most 10,000 ppm or at most 1,000 ppm or at most 900 ppm or at most 800 ppm or at most 700 ppm or at most 600 ppm or at most 500 ppm or at most 400 ppm or at most 300 ppm. The fining agent may be present in an amount of 300 ppm to 30,000 ppm or 400 ppm to 28,000 ppm or 500 ppm to 26,000 ppm or 600 ppm to 24,000 ppm or 700 ppm to 22,000 ppm or 800 ppm to 20,000 ppm or 900 ppm to 15,000 ppm or 1,000 ppm to 10,000 ppm.

The electrode material may be present in the glass product as an oxide in an amount of less than 15 ppm or less than 10 ppm or less than 5 ppm or less than 4.5 ppm or less than 4 ppm or less than 3.5 ppm or less than 3 ppm or less than 2.5 ppm or less than 2 ppm. The electrode material may be present as an oxide in an amount of more than 0.1 ppm or more than 0.2 ppm or more than 0.3 ppm or more than 0.4 ppm or more than 0.5 ppm or more than 0.75 ppm or more than 1 ppm.

The total carbon content in the glass product may be of less than 310 ppm or of less than 300 ppm or of less than 290 ppm or of less than 280 ppm or of less than 270 ppm or of less than 260 ppm or of less than 250 ppm.

In a further embodiment, the glass product may comprise a glass composition having an amount of an electrode material in the form of an oxide of from 0.1 ppm to 10 ppm, wherein optionally the electrode material is selected from Pt, Rh, Ir, Pd, alloys of these noble metals, Ta, Mo, $MoSi_2$, $MoZrO_2$, W, $SnO_2$ and combinations thereof.

The electrode material may be present in the glass product as an oxide in an amount of from 0.1 ppm to 10 ppm, from 0.1 ppm to 5 ppm, from 0.2 ppm to 4.5 ppm, from 0.3 ppm to 4 ppm, from 0.4 ppm to 3.5 ppm, from 0.5 ppm to 3 ppm, from 0.75 ppm to 2.5 ppm, or from 1 ppm to 2.5 ppm. The electrode material may be present as an oxide in an amount of less than 10 ppm or less than 5 ppm or less than 4.5 ppm or less than 4 ppm or less than 3.5 ppm or less than 3 ppm or less than 2.5 ppm or less than 2 ppm. The electrode material may be present as an oxide in an amount of more than 0.1 ppm or more than 0.2 ppm or more than 0.3 ppm or more than 0.4 ppm or more than 0.5 ppm or more than 0.75 ppm or more than 1 ppm.

In a further embodiment, the glass product may comprise a glass composition which contains alkali metal oxides in amounts of less than 20 % by weight, less than 15 % by weight, less than 12 % by weight, less than 10 % by weight or less than 5 % by weight. Optionally, the glass composition may be free of alkali metal oxides. In alternative embodiments, the amount of alkali metal oxides in the glass composition may be at least 1 % by weight or at least 2 % by weight. Optionally, the amount of alkali metal oxides in the glass composition may be $\geq$ 1 % by weight and < 20 % by weight or $\geq$ 2 % by weight < 10 % by weight.

The glass composition may be a borosilicate, alumino-borosilicate, or aluminosilicate glass.

In a further embodiment, the glass composition may contain alkaline earth metal oxides in amounts of less than 20 % by weight, less than 15 % by weight, less than 12 % by weight, less than 10 % by weight, or less than 5 % by weight. Optionally, the glass composition may be free of alkaline earth metal oxides. In alternative embodiments, the amount of alkaline earth metal oxides in the glass composition may be at least 1 % by weight or at least 2 % by weight. Optionally, the amount of alkaline earth metal oxides in the glass composition may be $\geq$ 1 % by weight and < 20 % by weight or $\geq$ 2 % by weight < 10 % by weight.

Optional glass compositions include $Al_2O_3$ in an amount of at least 1.5 % by weight or at least 5.0 % by weight or even at least 10.0 % by weight. The amount of $Al_2O_3$ may be up to 23.0 % by weight, up to 20.0 % by weight or up to 18.0 % by weight. In certain embodiments, the amount of $Al_2O_3$ may range from 1.5 % to 23.0 % by weight, from 5.0 % to 20.0 % by weight or from 10.0 % to 18.0 % by weight.

Additionally or alternatively, the glass composition may include $B_2O_3$ in an amount of at least 0.0 % by weight or at least 8.0 % by weight or even at least 10.0 % by weight. The amount of $B_2O_3$ may be up to 22.0 % by weight, up to 20.0 % by weight, up to 16.0 % by weight or up to 14.0 % by weight. In certain embodiments, the amount of $B_2O_3$ may range from 0.0 % to 22.0 % by weight, from 0.0 % to 20.0 % by weight, from 8.0 % to 16.0 % by weight or from 10.0 % to 14.0 % by weight.

Many highly viscous glass compositions contain significant amounts of $SiO_2$, $Al_2O_3$ and $B_2O_3$. Optionally, the glass compositions used in this invention have a total content of $SiO_2$, $Al_2O_3$ and $B_2O_3$ of at least 75.0 % by weight, at least 78.0 % by weight or even at least 85.0 % by weight. The total amount of $SiO_2$, $Al_2O_3$ and $B_2O_3$ may be limited to not more than 97.0 % by weight, up to 93.5 % by weight or up to 90.0 % by weight. Optionally, the amount of $SiO_2$, $Al_2O_3$ and $B_2O_3$ may range from 75.0 % to 95.0 % by weight, from 78.0 % to 92.5 % by weight or from 85.0 % to 90.0 % by weight.

Optionally, glass compositions used in this invention may comprise (in % by weight, the composition summing up to 100 %):

| | |
|---|---|
| $SiO_2$ | 71 - 77 |
| $B_2O_3$ | 9 - 12 |
| $Al_2O_3$ | 5.5 - 8 |
| $Na_2O$ | 6 - 8 |
| $K_2O$ | 0.1 - 0.9 |
| $Li_2O$ | 0 - 0.3 |
| $CaO$ | 0 - 1.5 |
| $BaO$ | 0 - 1 |
| F | 0 - 0.3 |
| Cl- | 0 - 0,3 |
| $MgO+CaO+BaO+SrO$ | 0 - 2 |

or

| | |
|---|---|
| $SiO_2$ | 71 - 77 |
| $B_2O_3$ | 9 - 12 |
| $Al_2O_3$ | 3.5 - 6 |
| $Na_2O$ | 5.5 - 8 |
| $K_2O$ | 0 - 0.5 |
| $Li_2O$ | 0 - 0.3 |
| $CaO$ | 0 - 3 |
| $BaO$ | 0 - 1.5 |
| F | 0 - 0.3 |
| Cl- | 0 - 0,3 |
| $MgO+CaO+BaO+SrO$ | 0 - 2 |

or

| | |
|---|---|
| $SiO_2$ | 60 - 85 |
| $Al_2O_3$ | 0 - 10 |
| $B_2O_3$ | 5 - 20 |
| $Li_2O + Na_2O + K_2O$ | 2 - 16 |
| $MgO+CaO+SrO+BaO+ZnO$ | 0 - 15 |
| $TiO_2 + ZrO_2$ | 0 - 6 |
| $P_2O_5$ | 0 - 2 |

optionally further comprising
coloring oxides, such as $Nd_2O_3$, $Fe_2O_3$, CoO, NiO, $V_2O_5$, $MnO_2$, $TiO_2$, CuO, $CeO_2$, $Cr_2O_3$,
0 - 2 % by weight fining agents, such as $As_2O_3$, $Sb_2O_3$, $SnO_2$, $SO_3$, Cl, F and/or $CeO_2$, and
0 - 5 % by weight rare earth metal oxides

In some embodiments, the glass composition can - alternatively or additionally to the compositions described above - be described by the following composition ranges.

In some embodiments, the glass composition can be a borosilicate glass which contains the following components in wt.-%:

| | |
|---|---|
| $SiO_2$ | 70.0 to 87.0 |
| $B_2O_3$ | 7.0 to 25.0 |
| $Na_2O + K_2O$ | 0.5 to 9.0 |
| $Al_2O_3$ | 0.0 to 7.0 |
| $CaO$ | 0.0 to 3.0 |

In some embodiments, the glass composition can be a borosilicate glass which contains the following components in wt.-%:

| | |
|---|---|
| SiO$_2$ | 70.0 to 86.0 |
| Al$_2$O$_3$ | 0.0 to 8.0, or 0.0 to 5.0 |
| B$_2$O$_3$ | 9.0 to 25.0 |
| Na$_2$O | 0.5 to 8.0, or 0.5 to 5.0 |
| K$_2$O | 0.0 to 1.0 |
| Li$_2$O | 0.0 to 2.0, or 0.0 to 1.0 |

In some embodiments, the glass composition can be a borosilicate glass which contains the following components in wt.-%:

| | |
|---|---|
| SiO$_2$ | 70.0 to 80.0, or 71.0 to 77.0 |
| Al$_2$O$_3$ | 3.0 to 8.0, or 3.5 to 8.0 |
| B$_2$O$_3$ | 9.0 to 15.0, or 9.0 to 12.0 |
| Na$_2$O | 5.5 to 8.0 |
| K$_2$O | 0.0 to 1.0, or 0.1 to 0.5 |
| Li$_2$O | 0.0 to 0.5, or 0.0 to 0.3 |
| CaO | 0.0 to 3.0, or 0.0 to 1.5 |
| BaO | 0.0 to 1.5 |
| F$^-$ | 0.0 to 0.3 |
| Cl$^-$ | 0.0 to 0.3 |
| MgO+CaO+BaO+SrO | 0.0 to 2.0 |

In some embodiments, the glass composition can be an alkali borosilicate glass which contains the following components in wt.-%:

| | |
|---|---|
| SiO$_2$ | 78.3 to 81.0 |
| Al$_2$O$_3$ | 3.5 to 5.3 |
| B$_2$O$_3$ | 9.0 to 13.0 |
| Na$_2$O | 3.5 to 6.5 |
| K$_2$O | 0.3 to 2.0 |
| CaO | 0.0 to 2.0 |

In some embodiments, the glass composition can be an alkali borosilicate glass which contains the following components in wt.-%:

| | |
|---|---|
| SiO$_2$ | 55.0 to 85.0 |
| Al$_2$O$_3$ | 0.0 to 15.0 |
| B$_2$O$_3$ | 3.0 to 20.0 |
| Na$_2$O | 3.0 to 15.0 |
| K$_2$O | 3.0 to 15.0 |
| ZnO | 0.0 to 12.0 |
| TiO$_2$ | 0.5 to 10.0 |
| CaO | 0.0 to 0.1 |

In some embodiments, the glass composition can contain the following components in wt.-%:

| | |
|---|---|
| SiO$_2$ | 58.0 to 75.0 |
| Al$_2$O$_3$ | 18.0 to 25.0 |

(continued)

| | |
|---|---|
| Li$_2$O | 3.0 to 6.0 |
| Na$_2$O + K$_2$O | 0.1 to 2.0 |
| MgO+CaO+BaO+ZnO | 1.5 to 6.0 |
| TiO$_2$ + ZrO$_2$ | 2.0 to 6.0 |

and optionally one or more of the oxides from Co, Ni, Fe, Nd, Mo, and optionally one or more refining agents selected from the group of SnO$_2$, chlorides, As$_2$O$_5$, Sb$_2$O$_5$, optionally 0.1 to 1.5 wt.-% SnO$_2$, or optionally 0.1 to 1.5 wt.-% As$_2$O$_5$, or optionally 0.1 to 1.5 wt.-% Sb$_2$O$_5$.

In some embodiments, the glass composition can contain the following components in wt.-%:

| | |
|---|---|
| SiO$_2$ | 58.0 to 65.0 |
| Al$_2$O$_3$ | 14.0 to 25.0 |
| B$_2$O$_3$ | 6.0 to 10.5 |
| MgO | 0.0 to 3.0 |
| CaO | 0.0 to 9.0 |
| BaO | 3.0 to 8.0 |
| ZnO | 0.0 to 2.0 |

wherein the sum of MgO, CaO and BaO is from 8.0 to 18.0 wt.-%.

In some embodiments, the glass composition can contain the following components in wt.-%:

| | |
|---|---|
| SiO$_2$ | 50.0 to 68.0, or 55.0 to 68.0 |
| Al$_2$O$_3$ | 15.0 to 20.0 |
| B$_2$O$_3$ | 0.0 to 6.0 |
| Li$_2$O | 0.0 to 6.0 |
| Na$_2$O | 1.5 to 16.0, or 8.0 to 16.0 |
| K$_2$O | 0.0 to 5.0 |
| MgO | 0.0 to 5.0 |
| CaO | 0.0 to 7.0, or 0.0 to 1.0 |
| ZnO | 0.0 to 4.0, or 0.0 to 1.0 |
| ZrO$_2$ | 0.0 to 4.0 |
| TiO$_2$ | 0.0 to 1.0, |

or substantially free from TiO$_2$

In a further embodiment, the glass product may comprise a glass composition having a conductivity for thermal radiation at 1,580 °C of at least 300 W/m·K. The conductivity for thermal radiation may be at least 300 W/m·K, at least 310 W/m·K, at least 320 W/m·K, or at least 330 W/m·K. The conductivity for thermal radiation may be at most 800 W/m K, at most 700 W/m K, at most 600 W/m. K, or at most 500 W/m. K.

In a further embodiment, the glass product may comprise a glass composition having an electric conductivity of at least 0.5 S/m in the molten state at a temperature of 1,600 °C. The electric conductivity may be at least 0.5 S/m, at least 0.75 S/m, at least 1 S/m, at least 2 S/m, at least 3 S/m, at least 4 S/m, at least 5 S/m, at least 10 S/m, at least 15 S/m, at least 20 S/m, at least 25 S/m, or at least 30 S/m. The electric conductivity may be at most 50 S/m, at most 48 S/m, at most 47 S/m, at most 46 S/m, at most 45 S/m, at most 44 S/m, at most 43 S/m, at most 42 S/m, at most 41 S/m, at most 40 S/m, at most 38 S/m, or at most 36 S/m. The electric conductivity may be 0.5 S/m - 50 S/m, 0.75 S/m - 48 S/m, 1 S/m - 47 S/m, 2 S/m - 46 S/m, 3 S/m - 45 S/m, 4 S/m - 44 S/m, 5 S/m - 43 S/m, 10 S/m - 42 S/m, 15 S/m - 41 S/m, 20 S/m - 40 S/m, 25 S/m - 38 S/m, or 30 S/m - 36 S/m. In particular examples, the electric conductivity may be 0.8 S/m, 1.7 S/m, 2.7 S/m, 3.7 S/m, 11.2 S/m, 13.2 S/m, 32.8 S/m, or 42.8 S/m.

In a further embodiment, the glass product may comprise a glass composition having a T2 at 1,300 °C or higher, and/or a temperature T4 at 900 °C or higher.

The method of this invention is particularly useful for glass compositions with very high melting temperatures, such as glass compositions comprising only limited amounts of alkali and alkaline earth metal oxides. The composition of the glass may, for example, be such that the melt has a viscosity of 100 dPas at temperatures above 1,550 °C. When heating the melt to a temperature sufficiently high that the viscosity is $10^{2.5}$ dPas or less, a lot of energy is required. However, low viscosities and the corresponding high temperatures are desirable for bubbles to leave the melt.

Optionally, the glass compositions used in this invention have T2 temperatures much higher than 1,300 °C. The T2 temperature for the glass melt in the melting vessel during the method of this disclosure may be above 1,350 °C, above 1,400 °C, above 1,450 °C, above 1,500 °C, above 1,550 °C, or above 1,580 °C and preferably even above 1,600 °C or above 1,620 °C. In embodiments, T2 temperature of the glass compositions may be less than 2,000 °C, less than 1,900 °C, less than 1,800 °C, less than 1,750 °C, or less than 1,700 °C. Glass compositions with very high T2 temperatures are very difficult to process and require a lot of energy for melting.

The T4 temperature of the glass composition in the melting vessel during the method of this disclosure may be above 900 °C or above 950 °C or above 1,000 °C and in particular above 1,050 °C or above 1,120 °C. In embodiments, T4 temperature of the glass compositions may be less than 1,500 °C, less than 1,450 °C, or less than 1,400 °C. Glass compositions with very high T4 temperatures are very difficult to process and require a lot of energy for melting.

In embodiments, the fining agent is selected from the group consisting of $As_2O_3$, $Sb_2O_3$, $CeO_2$, $SnO_2$, $Fe_2O_3$, chloride, fluoride, sulfate, and combinations thereof.

Short description of the Figures

**Figure 1**  is a scheme of a glass melting vessel with a single heating circuit using one pair of electrodes.

**Figure 2**  is a scheme of a glass melting vessel of an embodiment with three heating circuits each using one pair of electrodes and a centralized phase shift.

**Figure 3**  is a scheme of a glass melting vessel of an embodiment with three heating circuits each using one pair of electrodes and a decentralized phase shift.

**Figure 4**  is a scheme of a glass melting vessel of an embodiment with three heating circuits each one shifted in phase by 60°.

Description of the Figures

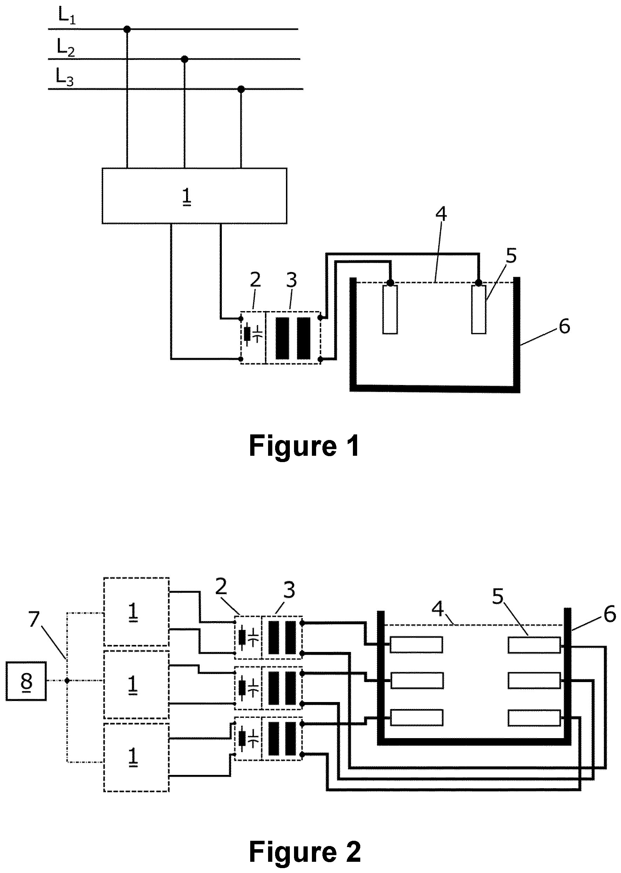

**Figure 1** shows a scheme of an exemplary glass melting vessel with a single heating circuit using one pair of electrodes. The purpose of this figure is to exemplify the constituents of a heating circuit as used within this application.

The upper left corner of the figure indicates the three conductors ($L_1$, $L_2$, $L_3$) of a three-phase power line provided from the power grid. These are connected to an inverter (1) which converts the power grid frequency of 50/60 Hz to a medium range frequency of from 20 Hz to 25,000 Hz. The inverter (1) is connected via the power factor correction (2) for prevention of harmonic currents to the transformer (3). In the melting vessel (6), a pair of electrodes (5) is arranged below the surface (4) of the glass melt such that the electrodes (5) coming from above are fully immersed in the glass melt.

**Figure 2** depicts a scheme of a glass melting vessel of an embodiment with three heating circuits each using one pair of electrodes. For better overview, the three conductors ($L_1$, $L_2$, $L_3$) providing power to the inverters (1) are not shown in this figure. The layout of the single heating circuits is identical to the one shown in Figure 1. The three electrode (5) pairs are in this example arranged horizontally extending from the walls of the melting vessel (6) and at different heights in the glass melt. The three inverters (1) are connected by means of the signal lines (7) with the common controller (8).

The common controller (8) is responsible for the coordination of the inverters (1). It creates a clock signal for synchronizing the connected inverters (1) which each provide a current and control its amplitude. This allows to set specific heating profiles for the single heating circuits independently from each other for the purpose of shaping the flow of the glass melt within the melting vessel (6). The optimized flow will be able to minimize or avoid dead zones and ascertain a homogeneously mixed glass melt which will in turn improve the glass quality. Also, the fining process can be improved by increasing the temperature in certain areas to decrease the viscosity of the melt for facilitating the surfacing of the bubbles.

Further, the common controller (8) has integrated a delay generator which allows applying a delay $\Delta t_1$, $\Delta t_2$, and $\Delta t_3$ to the trigger signals of the clock generator for the three inverters (1) of the three heating circuits. By applying a $\Delta t \neq 0$, the phase angle of the current provided by the respective inverter (1) can be shifted. This is an example of a centralized implementation of the delay.

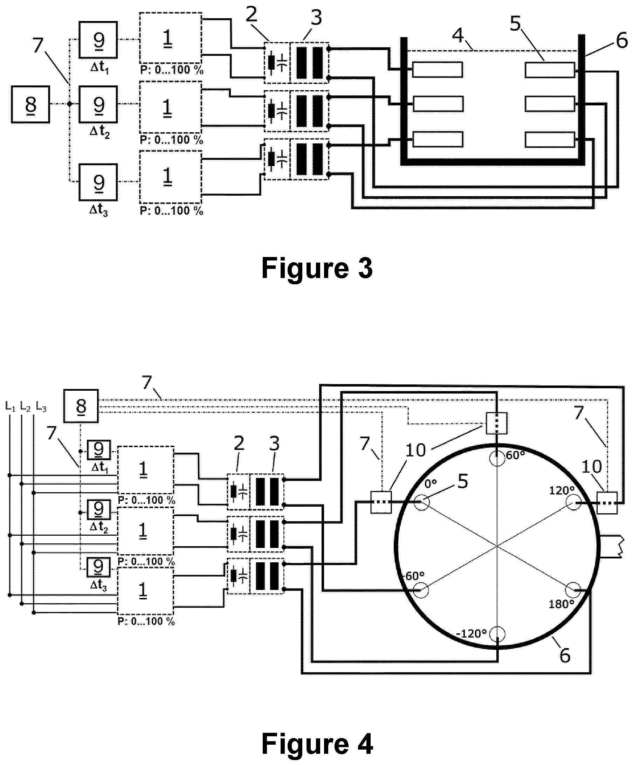

The embodiment shown in **Figure 3** is the same as in Figure 2 except for the implementation of the delay. Here, the phase angle shift is effected decentrally by means of the three delay generators (9) which are installed in the signal lines (7) between the common controller (8) and the inverters (1). As indicated in the figure, each of the delay generators (9) can provide an individual delay $\Delta t_1$, $\Delta t_2$, and $\Delta t_3$ to the trigger signal for its associated inverter (1) which can vary the power output from 0 % to 100 %.

The embodiment shown in **Figure 4** is also an example of a decentrally effected phase angle shift. As in Figure 1, the three conductors ($L_1$, $L_2$, $L_3$) of a three-phase power line provided from the power grid are shown which are connected to the three inverters (1) which are able to vary the power output from 0 % to 100 % and convert the power grid frequency of 50/60 Hz to a medium range frequency of from 20 Hz to 25,000 Hz. The inverters (1) are again connected via a power factor correction (2) for prevention of harmonic currents and a transformer (3) to the electrodes (5).

In the round melting vessel (6) which is shown in a top view, three pairs of electrodes (5) are arranged extending horizontally from the wall. As indicated in the figure, in this example, the three heating circuits formed by the three pairs of electrodes (5) are shifted in their phase angle of the current by 60° each. As in the example of Figure 3, this is achieved decentrally by means of three delay generators (9) which are installed in the signal lines (7) between the common controller (8) and the inverters (1) and provide an individual delay $\Delta t_1$, $\Delta t_2$, and $\Delta t_3$ to the trigger signal for its associated inverter (1).

In addition to this, in each heating circuit, in the electrical lines connecting the transformers (3) with the electrodes (5) a phase detector (10) is installed in close proximity to one of the electrodes (5). These three phase detectors (10) measure the actual current signal at the electrodes (5) and provide this information via the further signal lines (7) to the common controller (8). The common controller (8) then detects the phase angle shift by comparing this information with the clock signal provided to the inverters (1) including any applied delay and can adjust the trigger signal or the delay $\Delta t_1$, $\Delta t_2$, and $\Delta t_3$, respectively, in order to compensate for an undesired shift along the current flow from the inverter (1) to the electrodes (5) due to the cables and/or the transformers (3).

Reference numerals

| | |
|---|---|
| **1** | inverter |
| **2** | power factor correction |
| **3** | transformer |
| **4** | surface of the glass melt |
| **5** | electrode |
| **6** | melting vessel |
| **7** | signal line |
| **8** | controller |
| **9** | delay generator |
| **10** | phase detector |
| **$L_1$, $L_2$, $L_3$** | conductors of a 3-phase power line |

**Claims**

1. Method of making a glass product, comprising the steps of

   - melting a batch of raw materials to form a glass melt in a melting vessel (6),
   - heating the batch and/or the glass melt in the melting vessel using two or more heating circuits, each comprising an inverter (1) electrically connected via a power factor correction (2) and a transformer (3) to at least two electrodes (5), the electrodes (5) comprising an electrode material,
   - withdrawing the glass melt from the melting vessel (6),
   - forming the glass melt into a glass product,
   wherein each inverter (1) provides a current to its heating circuit and controls the amplitude independently of the other heating circuits; and
   wherein a common controller (8) acts as a clock generator generating a clock signal for the inverters (1) and controls a shift of the phase angle of the current provided by them to the heating circuits by independently applying a delay $\Delta t \geq 0$ μs to the clock signal; and
   wherein the electrodes (5) are operated at a current frequency of at most 25,000 Hz.

2. Method according to claim 1, wherein the electrodes (5) are operated at a current frequency of at least 20 Hz and at most 25,000 Hz, optionally of at least 50 Hz and at most 25,000 Hz, optionally of at least 50 Hz and at most 10,000 Hz, optionally of at least 100 Hz and at most 10,000 Hz, optionally of at least 1,000 Hz and at most 5,000 Hz, optionally of at least 1,000 Hz and at most 3,000 Hz.

3. Method according to claim 1 or 2, wherein a flow and/or the residence time of the glass melt in the melting vessel (6) are adjusted by setting the amplitude and/or the phase angle of the current of each individual heating circuit such that desired thermal zones are created within the glass melt.

4. Method according to at least one of the preceding claims, wherein the common controller (8) applies the delay $\Delta t \geq 0 \, \mu s$ to each clock signal internally and/or externally by means of delay generators (9).

5. Method according to at least one of the preceding claims, wherein in one or more or all of the heating circuits a phase detector (10) is installed between the transformers (3) and the electrodes (5) which measures the actual current signal at the electrodes (5) and the common controller (8) detects a phase angle shift by comparing this actual current signal with the clock signal provided to the inverters (1) including any applied delay $\Delta t$ and adjusts the clock signal and/or the delay $\Delta t$ in order to compensate for an undesired shift along the current flow from the inverter (1) to the electrodes (5).

6. Method according to at least one of the preceding claims, wherein the melting vessel (6) is selected from a melting tank, a platinum pipe, a fining tank, a horizontal flow duct, and a vertical duct.

7. Method according to at least one of the preceding claims, wherein one or more or all of the electrodes (5) are

   - rod-shaped and/or plate-shaped and/or dome-shaped and/or tube-shaped and/or block-shaped; and/or
   - arranged horizontally extending from a wall of the melting vessel (6) or vertically extending from a bottom of the melting vessel (6) or from a surface (4) of the glass melt.

8. Method according to at least one of the preceding claims, wherein

   - the method is a continuous process or batch process; and/or
   - additional heating is provided by a fuel burner or no fuel burner is used for additional heating; and/or
   - the method is a continuous process having a throughput of at least 1 t/d·m$^2$ of melting vessel (6) cross-section.

9. Method according to at least one of the preceding claims, wherein a temperature of the glass melt, a withdrawal rate of glass melt from the melting vessel (6), and an electrical operation frequency of the electrodes (5) is such that the corrosion rate of one or more or all of the electrodes (5) is less than 2.5 mm/a with a current density of 0.5 A/cm$^2$ and a glass melt temperature of 1,550 °C.

10. Method according to at least one of the preceding claims, wherein

    - the electrode material of one or more or all of the electrodes (5) is selected from Pt, Rh, Ir, Pd, alloys of these noble metals, Ta, Mo, $MoSi_2$, $MoZrO_2$, W, $SnO_2$, and combinations thereof; and/or
    - the current density used at one or more or all of the electrodes (5) is 0.2 A/cm$^2$ - 2.0 A/cm$^2$; and/or
    - a ratio of the current frequency to the electric conductivity of the melt at a temperature of 1,600 °C is 0.001 kHz $\Omega$ m to 50 kHz $\Omega$ m; and/or
    - the electric conductivity of the melt at a temperature of 1,600 °C is at least 0.5 S/m.

11. Apparatus for glass melting comprising

    - a melting vessel (6) having walls and a bottom, and optionally a superstructure, for holding a glass melt,
    - the melting vessel further having two or more heating circuits, each comprising an inverter (1) electrically connected via a power factor correction (2) and a transformer (3) to at least two electrodes (5) immersible into the glass melt,
    - a common controller (8),
    - conductors connecting the inverters (1), the power factor corrections (2), the transformers (3), and the electrodes (5),
    - signal lines (7) connecting the inverters (1) with the common controller (8), and
    - optionally an inlet and/or an outlet for the glass melt,
    wherein each inverter (1) provides a current to its heating circuit and controls the amplitude independently of the other heating circuits; and
    wherein the common controller (8) acts as a clock generator generating a clock signal for the inverters (1) and controls a shift of the phase angle of the current provided by them to the heating circuits by independently applying a delay $\Delta t \geq 0 \, \mu s$ to each clock signal; and
    wherein the inverters (1) are set to provide a current frequency of at most 25,000 Hz.

12. Apparatus according to claim 11, wherein

- one or more or all of the electrodes (5) are located partially or completely in or on a wall of the melting vessel (6) and/or in or on the bottom of the melting vessel (6) and/or constitute a wall section and/or a bottom section of the melting vessel (6); and/or
- one or more or all of the electrodes (5) are rod-shaped and/or plate-shaped and/or dome-shaped and/or tube-shaped and/or block-shaped; and/or
- the electrode material is selected from Pt, Rh, Ir, Pd, alloys of these noble metals, Ta, Mo, $MoSi_2$, $MoZrO_2$, W, $SnO_2$, and combinations thereof.

13. Apparatus according to claim 11 or 12, the melting vessel (6)

- is selected from a melting tank, a platinum pipe, a fining tank, a horizontal flow duct, and a vertical duct; and/or
- has a cross-sectional shape of a circle, an oval, or a polygon having 3 to 64 corners.

14. Apparatus according to at least one of claims 11 to 13, wherein the inverters (1) are set to provide a current frequency of at least 20 Hz and at most 25,000 Hz, optionally of at least 50 Hz and at most 25,000 Hz, optionally of at least 100 Hz and at most 10,000 Hz or of at least 1,000 Hz and at most 5,000 Hz.

15. Apparatus according to at least one of claims 11 to 14, wherein the common controller (8) is configured to apply the delay $\Delta t \geq 0\,\mu s$ to each clock signal internally and/or delay generators (9) are installed in the signal lines (7) connecting the inverters (1) with the common controller (8).

16. Apparatus according to at least one of claims 11 to 15, wherein in one or more or all of the heating circuits a phase detector (10) is installed between the transformers (3) and the electrodes (5) for measuring the actual current signal at the electrodes (5) and the common controller (8) is configured to detect a phase angle shift by comparing this actual current signal with the clock signal provided to the inverters (1) including any applied delay $\Delta t$ and to adjust the clock signal and/or the delay $\Delta t$ in order to compensate for an undesired shift along the current flow from the inverter (1) to the electrodes (5).

17. Glass product, optionally obtainable according to the method of one of claims 1 to 10, comprising a glass composition having a fining agent and electrode material, wherein the fining agent is present in an amount of at least 300 ppm and the electrode material is present as an oxide in an amount of less than 15 ppm, the glass product comprising less than 2 bubbles per 10 g of glass, wherein optionally the glass composition has a total carbon content of less than 310 ppm, based on the weight of the carbon atoms with respect to the weight of the glass product.

18. Glass product according to claim 17, the glass composition

- having an amount of an electrode material in the form of an oxide of from 0.1 ppm to 10 ppm, wherein optionally the electrode material is selected from Pt, Rh, Ir, Pd, alloys of these noble metals, Ta, Mo, $MoSi_2$, $MoZrO_2$, W, SnOz and combinations thereof; and/or
- containing alkali metal oxides in amounts of less than 20 % by weight and/or alkaline earth metal oxides in amounts of less than 20 % by weight; and/or
- having a conductivity for thermal radiation at 1,580 °C of at least 300 W/m·K; and/or
- having an electric conductivity of at least 0.5 S/m in the molten state at a temperature of 1,600 °C; and/or
- having a T2 at 1,300 °C or higher, and/or a temperature T4 at 900 °C or higher, wherein T4 is the temperature where the glass has a viscosity of $10^4$ dPas and T2 is the temperature where the glass has a viscosity of $10^2$ dPas.

19. Glass product according to claim 17 or 18, wherein the fining agent is selected from the group consisting of $As_2O_3$, $Sb_2O_3$, $CeO_2$, $SnO_2$, $Fe_2O_3$, chloride, fluoride, sulfate, and combinations thereof.

# Figure 1

# Figure 2

**Figure 3**

**Figure 4**

## EUROPEAN SEARCH REPORT

**Application Number**

EP 23 21 5757

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/131555 A1 (FLEMING RAY [US] ET AL) 19 September 2002 (2002-09-19) | 4,11 | INV.<br>C03B5/027 |
| Y | * claims 1, 2, 7, 10, 11, 31 and figures. * | 3,5-9,<br>12,13,<br>15,16,<br>18,19 | C03B5/185 |
| Y | US 3 818 112 A (SNOOK C ET AL) 18 June 1974 (1974-06-18)<br>* column 5, line 50-column 6, line 7. * | 9,10 | |
| X | US 4 600 426 A (SCHWENNINGER RONALD L [US]) 15 July 1986 (1986-07-15) | 1,11 | |
| Y | * column 5, lines 26-55;<br>claim 1; figure 5 * | 3,5-9,<br>12,13,<br>15,16,<br>18,19 | |
| Y | US 2013/279532 A1 (OHMSTEDE VOLKER [DE] ET AL) 24 October 2013 (2013-10-24)<br>* paragraphs [0156], [0140] * | 2,14 | |
| | | | **TECHNICAL FIELDS<br>SEARCHED (IPC)** |
| X | JP 2017 214272 A (SCHOTT AG) 7 December 2017 (2017-12-07) | 1,11 | C03B<br>A61L |
| Y | * items 100,G, 68.;<br>paragraphs [0047], [0069], [0068] * | 2,3,<br>5-10,<br>12-16 | H02M<br>H05G |
| X | EP 0 812 809 A2 (PRAXAIR TECHNOLOGY INC [US]) 17 December 1997 (1997-12-17)<br>* page 4, line 16-page 5, line 2 * | 17 | |
| Y | US 5 922 097 A (KOBAYASHI HISASHI [US] ET AL) 13 July 1999 (1999-07-13)<br>* column 5, line 65-column 7, line 11 * | 18,19 | |
| Y | JP 5 835691 B2 (NETUREN CO LTD) 24 December 2015 (2015-12-24)<br>* claims * | 5,16 | |

The present search report has been drawn up for all claims

| Place of search | Date of completion of the search | Examiner |
|---|---|---|
| The Hague | 25 April 2024 | Gkerou, Elisavet |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 5757

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2024

| Patent document cited in search report | | Publication date | Patent family member(s) | | | Publication date |
|---|---|---|---|---|---|---|
| US 2002131555 | A1 | 19-09-2002 | AU | 2002254259 | A1 | 03-10-2002 |
| | | | US | 2002131555 | A1 | 19-09-2002 |
| | | | WO | 02075910 | A2 | 26-09-2002 |
| US 3818112 | A | 18-06-1974 | BE | 814414 | A | 30-10-1974 |
| | | | CA | 1007686 | A | 29-03-1977 |
| | | | DE | 2420749 | A1 | 21-11-1974 |
| | | | FR | 2227706 | A1 | 22-11-1974 |
| | | | GB | 1466159 | A | 02-03-1977 |
| | | | IT | 1010289 | B | 10-01-1977 |
| | | | JP | S5013939 | A | 13-02-1975 |
| | | | NL | 7405742 | A | 01-11-1974 |
| | | | US | 3818112 | A | 18-06-1974 |
| US 4600426 | A | 15-07-1986 | NONE | | | |
| US 2013279532 | A1 | 24-10-2013 | CN | 103153886 | A | 12-06-2013 |
| | | | DE | 102010048297 | A1 | 16-05-2012 |
| | | | EP | 2627611 | A1 | 21-08-2013 |
| | | | JP | 5701391 | B2 | 15-04-2015 |
| | | | JP | 2013539743 | A | 28-10-2013 |
| | | | KR | 20130108389 | A | 02-10-2013 |
| | | | US | 2013279532 | A1 | 24-10-2013 |
| | | | WO | 2012048790 | A1 | 19-04-2012 |
| JP 2017214272 | A | 07-12-2017 | CN | 107304098 | A | 31-10-2017 |
| | | | DE | 102016107577 | A1 | 26-10-2017 |
| | | | EP | 3239110 | A1 | 01-11-2017 |
| | | | JP | 6605533 | B2 | 13-11-2019 |
| | | | JP | 2017214272 | A | 07-12-2017 |
| | | | US | 2017305775 | A1 | 26-10-2017 |
| EP 0812809 | A2 | 17-12-1997 | BR | 9703522 | A | 25-05-1999 |
| | | | CA | 2207509 | A1 | 11-12-1997 |
| | | | CN | 1169965 | A | 14-01-1998 |
| | | | EP | 0812809 | A2 | 17-12-1997 |
| | | | JP | H10114529 | A | 06-05-1998 |
| | | | KR | 980001880 | A | 30-03-1998 |
| US 5922097 | A | 13-07-1999 | BR | 9801797 | A | 25-05-1999 |
| | | | CA | 2240007 | A1 | 09-12-1998 |
| | | | CN | 1201763 | A | 16-12-1998 |
| | | | EP | 0884287 | A1 | 16-12-1998 |
| | | | ID | 20563 | A | 14-01-1999 |
| | | | JP | H1179755 | A | 23-03-1999 |
| | | | KR | 19990006739 | A | 25-01-1999 |

EPO FORM P0459

For more details about this annex : see Official Journal of the European Patent Office, No. 12/82

**page 1 of 2**

**ANNEX TO THE EUROPEAN SEARCH REPORT
ON EUROPEAN PATENT APPLICATION NO.**                    EP 23 21 5757

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2024

| Patent document cited in search report | Publication date | Patent family member(s) | | Publication date |
|---|---|---|---|---|
| | | US | 5922097 A | 13-07-1999 |
| JP 5835691 B2 | 24-12-2015 | JP | 5835691 B2 | 24-12-2015 |
| | | JP | 2013093249 A | 16-05-2013 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CZ 24918 U1
- DE 102018122017 A1
- WO 2014036979 A1
- JP 9315824 A
- JP 9208228 A
- US 4211887 A